# EUROPEAN PATENT SPECIFICATION

(11) **EP 3 961 023 B1**
(45) Date of publication and mention of the grant of the patent: **25.10.2023**
(21) Application number: 20193891.7
(22) Date of filing: 01.09.2020
(51) Int. Cl.: F02F 3/00, F16J 1/09

(54) **PISTON FOR AN INTERNAL COMBUSTION ENGINE AND METHOD FOR MANUFACTURE THEREOF**
KOLBEN FÜR EINE BRENNKRAFTMASCHINE UND ENSTSPRECHENDE HERSTELLUNGSVERFAHREN
PISTON POUR MOTEUR A COMBUSTION INTERNE ET SON PRODÉDÉ DE FABRICATION

(43) Date of publication of application: 02.03.2022
(73) Proprietor: FCA Italy S.p.A., 10135 Torino (IT)
(72) Inventor: MAGHINI, Paolo Maria, 10135 Torino (IT); ABOZZI, Antonio, 10135 Torino (IT)
(74) Representative: Marchitelli, Mauro

(56) References cited:
- WO-A1-2020/011767
- US-A1- 2002 046 593

## Description

### Field of the invention

The present invention relates to **methods for forming** pistons for internal combustion engines, of the type comprising a piston head and a piston skirt which extends from said piston head, and wherein the piston head has a lateral surface in which circumferential slots are formed for housing respective piston rings.

### Prior art

Since long the provision is known of oil drainage holes in the wall of the circumferential slot which is farthest away from the piston top surface. These holes define passages which enable oil to flow into the engine crankcase thereby avoiding the risk of leakages towards the combustion chamber during the engine operation. However, the known solutions do not always solve the problem of an adequate oil drainage satisfactorily. Further, in many solutions the draining holes are formed by means of a drilling operation, which requires the use of a drilling tip. The drilling tip is a delicate tool and therefore involves long machining times, which are not suitable to the need of a high productivity and involve non-tolerable production costs.

**A method for forming a piston for internal combustion engines according to the preamble of claim 1 is known from** WO 2020/011767 A1**. In this nown solutions the notches which are to act as oil drain passages are obtained by a drilling operation, orienting the axis of the drilling tool radially and orthogonally with respect to the piston axis. As indicated above, the drilling operation is not compatible with the need of efficient and inexpensive production.**

US 2002/046593 A1 **discloses a piston in which the above mentioned notches are portions of cylindrical surfaces whose axis is parallel to the piston axis and which are formed by a forging operation. Again, the forging operation is expensive, time-consuming and unable to ensure a precise geometry of the formed notches.**

### Object of the invention

The object of the present invention is that of overcoming the above-mentioned drawbacks by providing a **method** which is able to solve the problem of an adequate oil drainage satisfactorily and which at the same time is simple and inexpensive.

### Summary of the invention

In view of achieving this object, the invention provides a **method according to claim 1.**

In the preferred embodiment, two through notches are provided, but even more preferably the notches are at least four and are arranged at equiangularly spaced positions or at positions which are angularly spaced and distributed symmetrically with respect to a plane containing the piston axis and the axis of holes defined in the piston skirt for receiving the piston pin.

In the **invention,** the use of a rotating milling tool for forming the notches enables the above-described operation to be carried out in a simpler, faster and cheaper manner with respect to the known solutions in which the oil drainage holes are formed by means of drilling tips.

### Detailed description of one embodiment

The present invention will be now described with reference to the annexed drawings, given purely by way of non-limiting example, in which:
Figures 1, 2, 3 are perspective views of an exemplary embodiment of a piston **obtained with a method** according to the invention,
Figures 1A, 2A, 3A are details at an enlarged scale of the figures 1, 2, 3, respectively, and figure 4 is a simplified drawing which shows the operation for forming one of the notches which are provided for oil drainage in the piston, according to the **method of the** invention.

With reference to the drawings, reference numeral 1 designates an exemplary embodiment of a piston for an internal combustion engine. It is well understood that the present invention is applicable to any configuration of a piston, whatever is the technology used for forming the piston and whatever is the material constituting the piston.

In the specific illustrated embodiment, the piston 1 comprises a body made of steel and defining a head 2 from which a piston skirt projects, in which two holes 4 are formed, according to the conventional art, for receiving the pin for connecting the piston to the respective connecting rod.

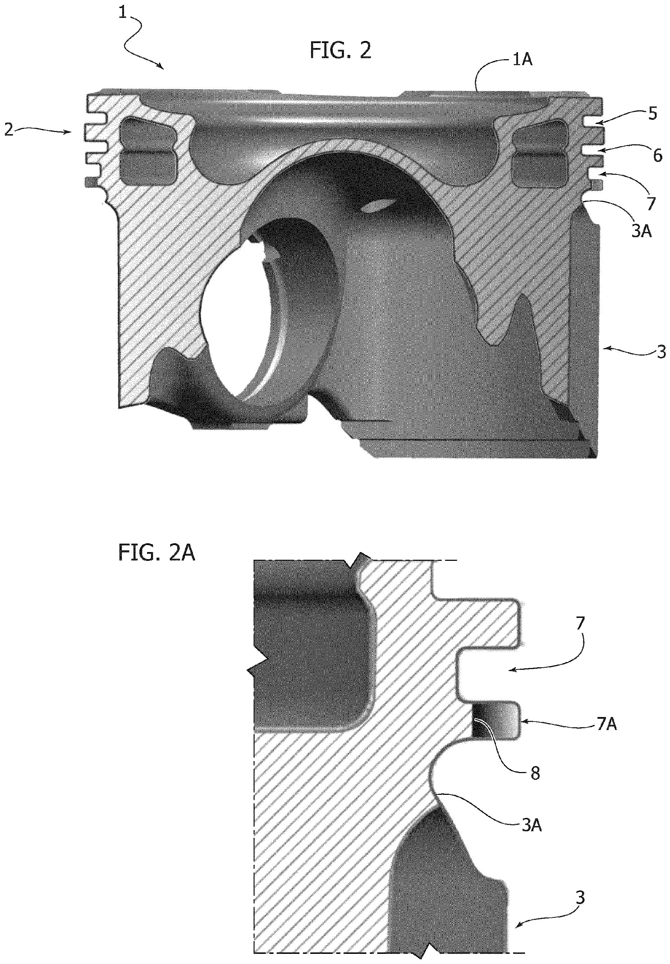

In the lateral wall of head 2 of the piston there are formed a first circumferential slot 5, closer to the top surface 1A of the piston 1 (see in particular figure 2), a second circumferential slot 6 and a third circumferential slot 7, which is more far away from the top surface 1A.

According to the conventional art, the circumferential slots 5, 6, 7 are provided for housing piston rings (not shown) of any known type which are for engaging the surface of the cylinder in which the piston is mounted and are intended to act as oil-scraping elements during the engine operation.

With reference now in particular to figure 2A, the skirt 3 of the piston has a portion of reduced diameter 3A adjacent to the head 2 of the piston, so that the third slot 7 is delimited on its side facing towards the skirt 3 (the lower side with reference to the drawings) by a circumferential rib 7A projecting radially outwardly with respect to the adjacent portion 3A of the skirt 3.

According to the invention, after a first forming step for forming the body of the piston 1, which can be carried out with the use of any known technology, such as by casting, in the circumferential rib 7A, one or more through notches 8 are formed, each extending throughout the entire thickness (i.e. the dimension in the direction parallel to the piston axis) of the rib 7A, so that, during **engine** operation, these notches 8 act as oil drainage passages which enable a communication between the third slot 7 and the annular chamber defined between the cylinder wall and the surface of the portion of reduced diameter 3A of the skirt 3.

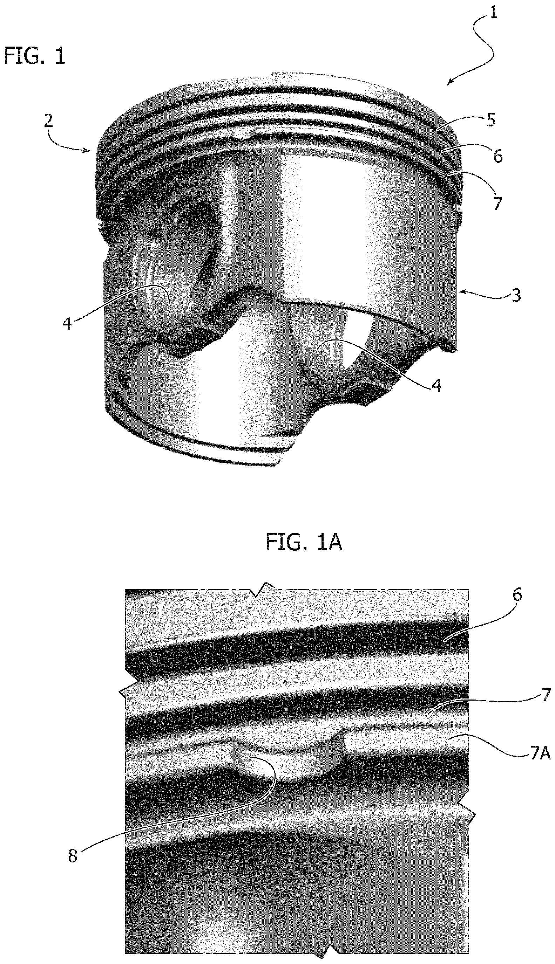

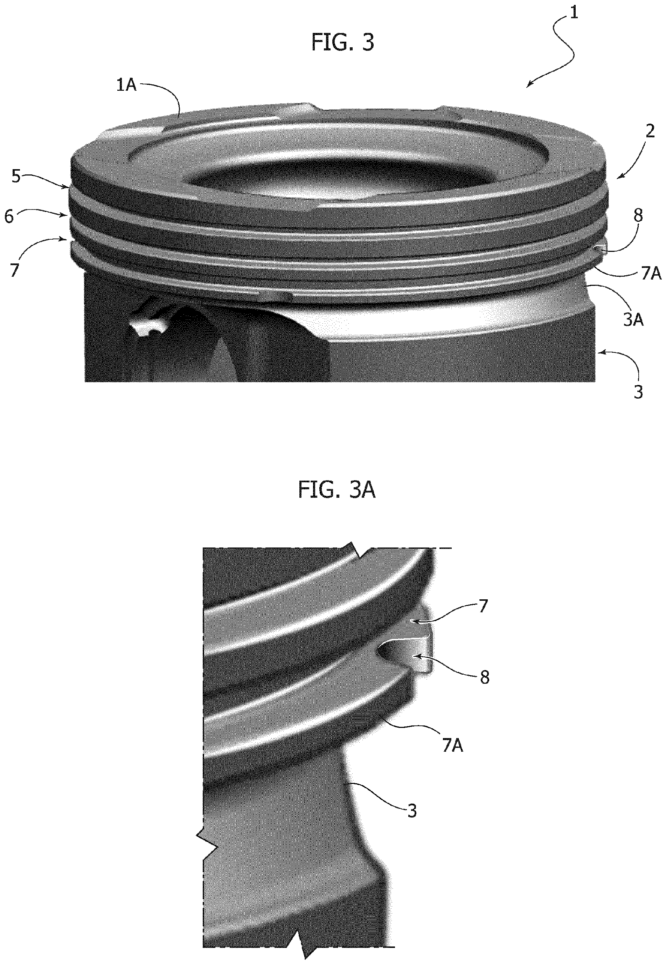

As shown in figures 1A and 3A, each notch 8 has an open circular profile. This profile is originated by the material removal operation which is carried out to obtain each notch 8.

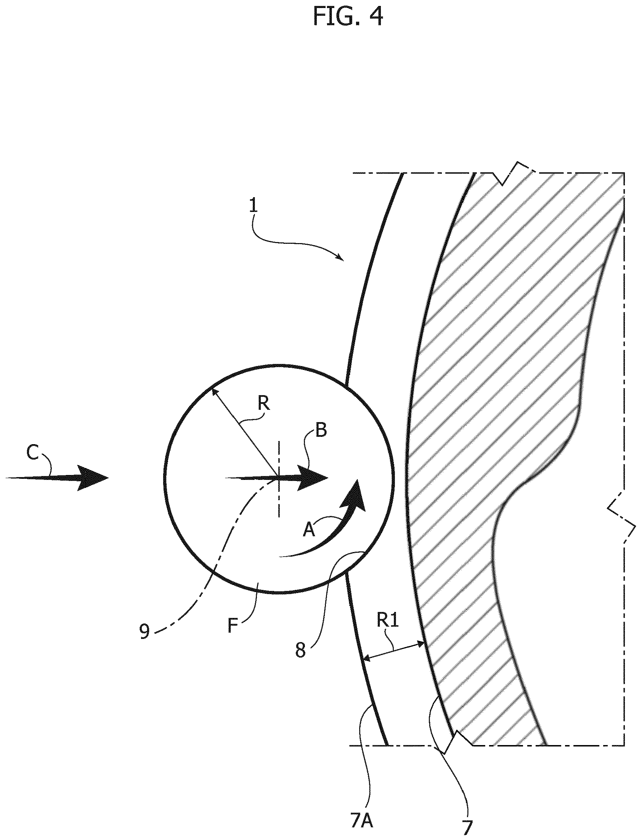

As indicated in the foregoing, this material removing operation is a machining operation which is carried out by means of a rotating milling tool. This operation is diagrammatically shown in figure 4, where reference F designates the milling tool, which rotates around an axis 9 which is substantially parallel to the piston axis. The tool F is rotated around its axis 9 (arrow A in figure 4) and at the same time is displaced radially with respect to the piston axis (arrow B in figure 4) until it reaches the final position shown in figure 4, for forming the notch 8.

In the embodiment illustrated herein, the axis 9 of the milling tool is maintained parallel to the piston axis during its radial movement. However, nothing excludes that the axis of the tool F can be slightly inclined towards one side or the other when viewed in the direction of arrow C shown in figure 4, in order to obtain a corresponding inclination of the notch 8.

Although the number of notches 8 can be any, in the preferred embodiment they are at least two in number and even more preferably they are at least four in number. In one exemplary embodiment, there are provided four notches 8 which are arranged equiangularly spaced (i.e. at 90 degrees relative to each other) or they can be arranged spaced and at symmetrical positions with respect to a plane containing the piston axis and the axis of the holes 4 for the piston pin.

As it will become apparent from the foregoing description, the **method** according to the invention enable**s** the problem of draining oil from the third piston slot to be solved satisfactorily without involving complicated or expensive operations.

Naturally, while the principle of invention remains the same, the details of construction and the embodiments may widely vary with respect to what has been described and illustrated purely by way of example, without departing from the scope of the present invention.

## Claims

1. A method for forming a piston of an internal combustion engine,
said piston having a piston head (2) and a piston skirt (3) which extends from said piston head (2),
wherein the piston head (2) has a lateral surface in which circumferential slots (5, 6, 7) are formed for housing the respective piston rings,
wherein the piston skirt (3) has a portion of reduced diameter (3A) adjacent to said piston head (2), so that the circumferential slot (7) which is farthest away from the top surface (1A) of piston (1) is delimited, on its side facing towards the skirt (3), by a circumferential rib (7A) projecting radially outwardly with respect to the wall of said adjacent portion (3A) of the skirt (3),
wherein in said circumferential rib (7A) there are formed, starting from its outer peripheral edge, one or more through notches (8), which extend throughout the entire thickness of said rib (7A) and are configured for defining drainage passages for the engine lubrication fluid, through which, in the operative condition of the piston, said circumferential slot (7) which is farthest away from the top surface (1A) of the piston (1) communicates with the annular space defined between the wall of the engine cylinder and said portion of reduced diameter (3A) of the piston skirt,
wherein said notches (8) are formed by means of a material removing operation in a stage subsequent to a first forming step for forming the piston body,
said method being **characterised in that** said notches (8) are formed by means of a machining operation, with the aid of a rotating milling tool (F) which is displaced radially with respect to the piston axis, while the axis of the milling tool (F) is maintained parallel to the piston axis or slightly inclined with respect to a direction parallel to the piston axis.

2. Method according to claim 1, **characterised in that** at least two notches (8) are provided.

3. Method according to claim 2, **characterised in that** the notches (8) are equiangularly spaced.

4. Method according to claim 2, **characterised in that** the notches (8) are angularly spaced from each other and are arranged symmetrically with respect to a plane containing the piston axis (1) and the axis of two holes (4) for the piston pin which are defined in said skirt (3).

## Patentansprüche

1. Verfahren zum Ausbilden eines Kolbens einer Brennkraftmaschine, wobei der Kolben einen Kolbenboden (2) und einen Kolbenschaft (3), der sich von dem Kolbenboden (2) erstreckt, umfasst,
wobei der Kolbenboden (2) eine Seitenfläche aufweist, in der umlaufende Nuten (5, 6, 7) ausgebildet sind, um die jeweiligen Kolbenringe aufzunehmen,
wobei der Kolbenschaft (3) einen an den Kolbenboden (2) angrenzenden Abschnitt mit verringertem Durchmesser (3A) derart aufweist, dass die umlaufende Nut (7), die am weitesten von der oberen Oberfläche (1A) des Kolbens (1) entfernt ist, auf ihrer zum Schaft (3) gerichteten Seite durch eine umlaufende Rippe (7A) begrenzt wird, die radial nach außen in Bezug auf die Wand des angrenzenden Abschnitts (3A) des Schafts (3) vorsteht,
wobei in der umlaufenden Rippe (7A), ausgehend von ihrem äußeren Umfangsrand, eine oder mehr durchgehende Einbuchtungen (8) ausgebildet sind, die sich durch die ganze Dicke der Rippe (7A) erstrecken und dazu gestaltet sind, Ablaufdurchgänge für die Motorschmierflüssigkeit zu definieren, durch die im Betriebszustand des Kolbens die umlaufende Nut (7), die am weitesten von der oberen Oberfläche (1A) des Kolbens (1) entfernt ist, mit dem ringförmigen Raum in Verbindung steht, der zwischen der Wand des Motorzylinders und dem Abschnitt mit verringertem Durchmesser (3A) des Kolbenschafts definiert ist,
wobei die Einbuchtungen (8) mittels eines materialabtragenden Vorgangs in einer Phase nach einem ersten Ausbildungsschritt zum Ausbilden des Kolbenkörpers ausgebildet werden, wobei das Verfahren **dadurch gekennzeichnet ist, dass** die Einbuchtungen (8) mittels eines Bearbeitungsvorgangs mithilfe eines rotierenden Fräswerkzeugs (F) ausgebildet werden, das radial in Bezug auf die Kolbenachse verschoben wird, während die Achse des Fräswerkzeugs (F) parallel zur Kolbenachse oder in Bezug auf eine zur Kolbenachse parallele Richtung leicht geneigt gehalten wird.

2. Verfahren nach Anspruch 1, **dadurch gekennzeichnet, dass** mindestens zwei Einbuchtungen (8) vorgesehen werden.

3. Verfahren nach Anspruch 2, **dadurch gekennzeichnet, dass** die Einbuchtungen (8) im gleichen Winkelabstand angeordnet sind.

4. Verfahren nach Anspruch 2, **dadurch gekennzeichnet, dass** die Einbuchtungen (8) im gleichen Winkelabstand zueinander und symmetrisch in Bezug auf eine Ebene angeordnet sind, die die Kolbenachse (1) und die Achse von zwei im Kolbenschaft (3) definierten Löchern (4) für den Kolbenbolzen enthält.

## Revendications

1. Procédé pour former un piston d'un moteur à combustion interne,
ledit piston ayant une tête de piston (2) et une jupe de piston (3) qui s'étend depuis ladite tête de piston (2),
dans lequel la tête de piston (2) a une surface latérale dans laquelle des fentes circonférentielles (5, 6, 7) sont formées pour loger les segments de piston respectifs,
dans lequel la jupe de piston (3) a une partie de diamètre réduit (3A) adjacente à ladite tête de piston (2), de sorte que la fente circonférentielle (7) qui est la plus éloignée de la surface supérieure (1A) du piston (1) soit délimitée, sur son côté tourné vers la jupe (3), par une nervure circonférentielle (7A) faisant saillie radialement vers l'extérieur par rapport à la paroi de ladite partie adjacente (3A) de la jupe (3),
dans lequel, dans ladite nervure circonférentielle (7A), sont formées, à partir de son bord périphérique externe, une ou plusieurs encoches traversantes (8), qui s'étendent sur toute l'épaisseur de ladite nervure (7A) et sont configurées pour définir des passages de drainage pour le fluide de lubrification de moteur, à travers lesquels, dans l'état de fonctionnement du piston, ladite fente circonférentielle (7) qui est la plus éloignée de la surface supérieure (1A) du piston (1) communique avec l'espace annulaire défini entre la paroi du cylindre de moteur et ladite partie de diamètre réduit (3A) de la jupe de piston,
dans lequel lesdites encoches (8) sont formées par une opération de retrait de matériau dans une étape ultérieure à une première étape de formation pour former le corps de piston,
ledit procédé étant **caractérisé en ce que** lesdites encoches (8) sont formées par une opération d'usinage, à l'aide d'un outil de fraisage rotatif (F) qui est déplacé radialement par rapport à l'axe de piston, tandis que l'axe de l'outil de fraisage (F) est maintenu parallèle à l'axe de piston ou légèrement incliné par rapport à une direction parallèle à l'axe de piston.

2. Procédé selon la revendication 1, **caractérisé en ce qu'**au moins deux encoches (8) sont fournies.

3. Procédé selon la revendication 2, **caractérisé en ce que** les encoches (8) sont équiangulairement espacées.

4. Procédé selon la revendication 2, **caractérisé en ce que** les encoches (8) sont espacées angulairement les unes des autres et sont agencées symétriquement par rapport à un plan contenant l'axe de piston (1) et l'axe de deux trous (4) pour la tige de piston qui sont définis dans ladite jupe (3).
